# EUROPÄISCHE PATENTANMELDUNG

(11) **EP 0 952 537 A2**
(43) Veröffentlichungstag der Anmeldung: **27.10.1999**
(21) Anmeldenummer: 99106252.2
(22) Anmeldetag: 14.04.1999
(51) Int. Cl.: G06F 17/60

(54) **System zur Herstellung von Daten enthaltenden Datenträgern**

(30) Priorität: 20.04.1998 DE 19817578
(71) Anmelder: Société Européenne des Satellites, 6815 Château de Betzdorf (LU)
(72) Erfinder: Schneider, Thomas, 54298 Aach/Hohensonne (DE); Bethscheider, Gerhard, 54441 Ayl (DE)
(74) Vertreter: HOFFMANN - EITLE

(57) **Zusammenfassung**

Zur Herstellung von Daten enthaltenden Datenträgern werden Daten über eine asymmetrische Übertragungsstrecke (4) von einem Datenbankserver (2) zu einem Datenbankclient (3) übertragen und der Datenträger von dem Datenbankclient hergetellt.

## Beschreibung

Die Erfindung betrifft ein System zur Herstellung von Daten enthaltenden Datenträgern.

Für die Speicherung von Daten existieren verschiedene Datenträger, die zumindest einen lesenden, in vielen Fällen aber auch einen schreibenden Zugriff gestatten. Beispiele für nur lesbare Datenträger sind die insbesondere aus dem Musikbereich bekannten Compact-Disks (CD) und die für die Speicherung von Software eingesetzten CD-ROMs. Ein neuerer Datenträgertyp ist die DVD (Digital Versatile Disc), bei der es auch Nur-Lese-Typen, z.B. DVD-ROM, DVD-R oder DVD-Video gibt. Zu den nicht nur lesbaren, sondern auch beschreibbaren Datenträgern zählen Disketten, aber auch beschreibbare optische Datenträger wie CD-RW, DVD-RAM oder DVD+RW.

Die Bevorratung von Datenträgern, beispielsweise Compact Discs (CD), CD-ROM oder Disketten stellt für Händler aufgrund der Vielfalt der auf diesen Datenträgern angebotenen Informationen ein Problem dar. Um den für die Bevorratung erforderlichen Platz zu minimieren ist es wünschenswert, die Daten erst dann auf den Datenträger zu übertragen, wenn der Kaufwunsch des Kunden feststeht. Der gewünschte Datenträger wird dadurch erst dann hergestellt, wenn der Daten enthaltende Datenträger von einem Kunden verlangt wird. Jedoch ist auch die umfassende Bevorratung von Daten mit großem Hardware- und Softwareaufwand verbunden, der von dem einzelnen Händler nicht erwartet werden kann.

Vor diesem Hintergrund liegt der Erfindung die Aufgabe zugrunde, ein neues System zur Herstellung von Daten enthaltenden Datenträgern zu schaffen, mit dessen Hilfe die Daten enthaltenden Datenträger beim Vorliegen einer Anforderung ohne große Wartezeiten herstellbar sind.

Gelöst wird diese Aufgabe durch ein System mit dem in Patentanspruch 1 angegebenen Merkmalen. Vorteilhafte Ausgestaltungen ergeben sich aus den Unteransprüchen.

Ein wesentlicher Aspekt der Erfindung besteht darin, daß zwischen dem Datenbankserver und dem Datenbankclient eine asymetrische Verbindung besteht, d.h. daß die Übertragungsgeschwindigkeit vom Datenbankserver zum Datenbankclient sehr viel größer ist als die Übertragungsgeschwindigkeit in umgekehrter Richtung. Die Erfindung berücksichtigt dadurch das unterschiedliche Datenvolumen, das in den beiden Kommunikationsrichtungen übertragen werden muß. Als asymmetrische Verbindung zwischen dem Datenbankserver und dem Datenbankclient bietet sich eine Satellitenstrecke an. Dies besitzt den weiteren Vorteil, daß der Datenbankserver die Abstrahlcharakteristik des Satelliten nutzen kann, der einen sehr großflächigen Bereich bestrahlt und dabei gleichzeitig eine sehr hohe Datenübertragungsgeschwindigkeit ermöglicht. Der Aufwand auf der Seite des Datenbankclients ist dabei vergleichsweise gering, zumal die Empfangsanlagen aus anderen Bereichen der Satellitenkommunikation bekannt sind.

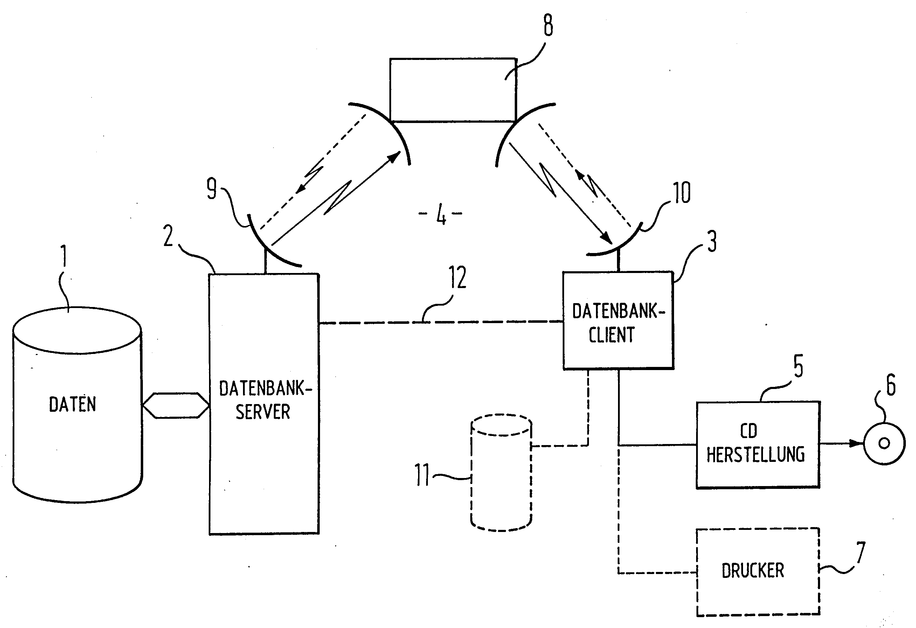

In der Figur ist ein Ausführungsbeispiel des erfindungsgemäßen Systems gezeigt.

In einem Datenspeicher 1 werden große Datenmengen bevorratet, von denen Teile auf Abruf auf einen Datenträger übertragen werden. Um den Zugriff auf den Datenspeicher 1 zu ermöglichen, ist ein Datenbankserver 2 vorgesehen, der mit dem Datenspeicher 1 verbunden ist, um darauf zumindest lesend zuzugreifen. In der Regel ist der Datenbankserver 2 jedoch so ausgestaltet, daß über die zum Datenspeicher 1 bestehende Verbindung auch Daten in den Datenspeicher 1 geschrieben werden können. Der Datenbankserver 2 und der Datenbankspeicher 1 werden von einem Hersteller der Daten, beispielsweise einem Verlag, betrieben. Daneben besteht die Möglichkeit, daß ein Datenbankbetreiber die Daten des Herstellers übernimmt und auf seinen Rechnern speichert und bereitstellt.

Als Gegenstück zum Datenbankserver 2 ist erfindungsgemäß ein Datenbankclient 3 vorgesehen, der mit einer Einrichtung 5 zur Herstellung des einzelnen Datenträgers 6 verbunden ist. Wenn als Datenträger 6 eine Diskette eingesetzt wird, handelt es sich bei der Einrichtung 5 um ein Diskettenlaufwerk. Bei einer Compakt Disc oder einem ähnlichen optischen Speicher als Datenträger 6 handelt es sich bei der Vorrichtung 5 um ein entsprechendes Schreibgerät, beispielsweise einem CD-Brenner. Für andere Datenträger 6, beispielsweise elektronische Speicherkarten oder Magnetbänder, existieren entsprechende Schreib-/Lesegeräte.

Der Datenbankclient 3 kann ferner mit einem Drucker 7 verbunden sein, um Aufkleber für die Datenträger 6 herstellen zu können, die nach der Herstellung der Datenträger 6 auf diese zur Identifikation aufgeklebt werden. Mit Hilfe des Druckers 7 können auch die Inlays für Datenträgerhüllen (CD-Box), kleine Brochüren oder vollständige Software-Bedienungsanleitungen gedruckt werden. Da die Daten individuell zusammenstellbar sind, können auch die Textinformationen individuell zusammengestellt werden.

Zwischen dem Datenbankserver 2 und dem Datenbankclient 3 ist eine Übertragungsstrecke 4 vorgesehen, die erfindungsgemäß asymmetrisch ausgelegt ist. Das bedeutet, daß die Datenübertragungsgeschwindigkeit in einem ersten Kanal (Hinkanal), nämlich vom Datenbankserver 2 zum Datenbankclient 3 sehr viel größer ist als die Datenübertragungsgeschwindigkeit in einem zweiten Kanal (Rückkanal), nämlich vom Datenbankclient 3 zum Datenbankserver 2. Für die im folgenden noch genauer erläuterten Satellitenstrecken sind typische Werte für den Hinkanal 38 Mbit/s und für den Rückkanal 2 Mbit/s. Auf diese Weise wird erreicht, daß die sehr großen Datenmengen, die vom Datenbankserver 2 zum Datenbankclient 3 zu übertragen sind, in einer Art und Weise übertragen werden, die lange Wartezeiten bei der Herstellung des Datenträgers 6 vermeidet. Für die Anforderungen der Daten ist die sehr viel geringere Übertragungsgeschwindigkeit vom Datenbankclient 3 zum Datenbankserver 2 ausreichend, da dabei nur sehr geringe Datenmengen anfallen.

Als besonders geeignete Übertragungsstrecke 4 bietet sich die Übertragung über einen Satelliten 8 an. Dazu ist beim Datenbankserver 2 eine Satellitensende-/empfangsanlage9 vorgesehen, die sowohl den Empfang der über den Satelliten übertragenen Datenanforderung ermöglicht, aber auch und insbesondere ein Senden der Daten zum Datenbankclient 3 mit einer großen Übertragungsrate. Die Satellitenantenne 9 steht in der Darstellung der Figur für die verschiedenen Komponenten der Sende-/Empfangsanlage, die mit dem Datenbankserver 2 verbunden ist, um den Empfang und insbesondere das Aussenden der Daten zu ermöglichen. Der Aufwand für eine Sende-/Empfangsanlage dieser Art ist im Vergleich mit dem Aufwand auf der Seite des Datenbankclients 3 sehr viel größer, da auf der Seite des Datenbankservers 2 für die Übertragung der Daten eine hohe Übertragungsrate sichergestellt werden muß. Auf der Seite des Datenbankclients 3 ist demgegenüber für die Sende-/Empfangsanlage, die in der Figur repräsentiert wird durch die Satellitenantenne 10, ein sehr viel geringerer Aufwand erforderlich. Denn das Aussenden der Datenanforderung erfolgt bei der erfindungsgemäß vorgesehenen asymmetrischen Übertragungsstrecke mit einer sehr viel geringeren Übertragungsgeschwindigkeit, was den Aufwand im Sendeteil der Sende-/Empfangsanlage regelmäßig erheblich reduziert. Der Empfang der mit einer hohen Übertragungsrate übertragenen Daten ist ebenfalls mit einem vergleichsweise geringen Aufwand realisierbar.

Wegen der sehr geringen Bandbreite, die im Rückkanal der Übertragungsstrecke, als vom Datenbankclient zum Datenbankserver erforderlich ist, kann anstelle einer Satellitenstrecke für den Rückkanal auch ein terrestrischer Rückkanal vorgesehen sein, der in der Figur mit 12 bezeichnet ist. Bei dem terrestrischen Rückkanal kann es sich um analoge oder digitale Leitungsnetze handeln, die entweder permanent belegt sind oder von Fall zu Fall aufgebaut werden (Wählverbindung).

Der Datenbankclient 3 kann mit einem Zwischenspeicher 11 verbunden werden, in dem der Datenbankclient 3 die von dem Datenbankserver 2 empfangenen Daten zwischenspeichert. Erst nach Abschluß der Übertragung und Zwischenspeicherung der Daten überträgt der Datenbankclient 3 dann die Daten mit Hilfe der Einrichtung 5 auf die Datenträger 6. Der Zwischenspeicher kann insbesondere dann vorgesehen werden, wenn die Datenübertragungsgeschwindigkeit vom Datenbankserver 2 zum Datenbankclient 3 größer ist als die Schreibgeschwindigkeit der Einrichtung 5, mit der die Daten auf die Datenträger 6 übertragen werden können. Der Zwischenspeicher kann auch dann vorteilhaft eingesetzt werden, wenn zunächst eine vollständige und fehlerfreie Übertragung der Daten vom Datenbankserver 2 zum Datenbankclient 3 erfolgen soll, bevor die Übertragung der Daten auf den Datenträger 6 erfolgt. Dies ist insbesondere dann von Vorteil, wenn es sich bei den Datenträgern 6 um ein nicht wiederbeschreibbares Medium handelt.

Im folgenden wird anhand der Figur der Ablauf einer Datenanforderung und Datenübertragung erläutert.

Zunächst werden die Daten ausgewählt, die auf dem Datenträger 6 gespeichert werden sollen. Bei den Daten handelt es sich beispielsweise um Programme, Musikstücke, Bilder oder Spielfilme. Nach der Auswahl wird die Datenanforderung vom Datenbankclient 3 über die Übertragungsstrecke 4 und den Datenbankserver 2 übertragen. Der Datenbankserver liest die der Datenanforderung entsprechenden Daten aus dem Datenspeicher 1 aus und überträgt die Daten über die Übertragungsstrecke 4. Diese Übertragung geschieht mit einer hohen Übertragungsrate, so daß auch größere Datenmengen in ausreichend kurzer Zeit an den Datenbankclient 3 übertragen werden können. Der Datenbankclient stellt mit Hilfe der empfangenen Daten einen Datenträger 6 her, indem er unter Verwendung der Einrichtung 5 die vom Datenbankserver 2 empfangenen Daten auf dem Datenträger 6 speichert. In einer vorteilhaften Ausgestaltung werden die vom Datenbankserver 2 empfangenen Daten zunächst im Zwischenspeicher 11 des Datenbankclients 2 zwischengespeichert. Dies ist insbesondere dann erforderlich, wenn die Schreibgeschwindigkeit der Einrichtung 5, mit der die Daten auf den Datenträger 6 geschrieben werden können, geringer ist als die Übertragungsgeschwindigkeit vom Datenbankserver zum Datenbankclient 3. Die Zwischenspeicherung der Daten im Zwischenspeicher 11 des Datenbankclients 3 bietet aber auch die Möglichkeit, zunächst eine vollständige und fehlerfreie Übertragung der Daten vom Datenbankserver 2 abzuwickeln, bevor die Daten auf den Datenträger 6 übertragen werden, da insbesondere bei nur einmal beschreibbaren Datenträgern ansonsten die Gefahr besteht, fehlerhafte Daten auf den Datenträger zu übertragen.

Neben den Daten, die auf dem Datenträger 6 gespeichert werden, kann der Datenbankclient 3 vom Datenbankserver Daten erhalten, die für die Herstellung eines Aufklebers für den Datenträger 6 geeignet sind. Diese Information kann der Datenbankclient 3 aber auch selbst auf der Basis der Datenanforderung, d.h. auf der Basis der Auswahl der Daten, wie vom Datenbankserver abgerufen werden. Der Aufkleber wird damit mit Hilfe des Druckers 7 ausgedruckt und auf den Datenträger 6 aufgeklebt. Mit dem Drucker sind auch Einlegeblätter für Datenträgerhüllen oder anderes begleitendes Textmaterial bis hin zu Broschüren und Handbüchern herstellbar.

Mit dem erfindungsgemäßen System können auch Druckwerke hergestellt werden, da die für die Herstellung eines Druckwerks zu übertragende Datenmenge ebenfalls sehr groß ist und mit Hilfe der erfindungsgemäßen asymmetrischen Übertragungsstrecke in ausreichend kurzer Zeit von dem Datenbankserver and den Datenbankclient übertragen werden kann. Der Drucker 7 dient dann zur Herstellung des Druckwerkes, beispielsweise zur Herstellung eines Buches, das nach dem Druckvorgang vorteilhafterweise gebunden wird.

## Patentansprüche

1. System zur Herstellung von Daten enthaltenden Datenträgern mit
- einem Datenbankserver (2), der mit einem Datenspeicher (1) zumindest für einen lesenden Zugriff auf die in dem Datenspeicher gespeicherten Daten verbunden ist,
- einem Datenbankclient (3), der mit einer Schreib-/Lese-Einrichtung (5) für die herzustellenden Datenträger (6) verbunden ist, und
- einer asymmetrischen Übertragungsstrecke (4), über die in einem ersten Kanal Daten von dem Datenbankclient (3) zu dem Datenbankserver (2) bei einer ersten Datenbankübertragungsgeschwindigkeit übertragbar sind und über die in einem zweiten Kanal Daten von dem Datenbankserver (2) zu dem Datenbankclient (2) bei einer zweiten Datenübertragungsgeschwindigkeit übertragbar sind, die sehr viel größer als die erste Datenübertragungsgeschwindigkeit ist.

2. System zur Herstellung von Daten enthaltenden Datenträgern nach Anspruch 1,
dadurch **gekennzeichnet**, daß die Übertragungsstrecke eine Satellitenübertragungsstrecke (4) ist.

3. System zur Herstellung von Daten enthaltenden Datenträgern nach Anspruch 1,
dadurch **gekennzeichnet**, daß der erste Kanal der Übertragungsstrecke ein terrestrisches Leitungsnetz (12) und der zweite Kanal der Übertragungsstrecke eine Satellitenübertragungsstrecke (4) ist.

4. System zur Herstellung von Daten enthaltenden Datenträgern nach Anspruch 1,
dadurch **gekennzeichnet**, daß die Übertragungsstrecke ein terrestrisches Leitungsnetz (12) ist.

5. System zur Herstellung von Daten enthaltenden Datenträgern nach einem der Ansprüche 1 bis 4,
dadurch **gekennzeichnet**, daß der Datenbankclient (3) mit einem Drucker (7) für die Anfertigung von Aufklebern für die Datenträger (6) verbunden ist.

6. System nach einem der vorhergehenden Ansprüche,
dadurch **gekennzeichnet**, daß der Datenbankclient (3) mit einem Drucker (7) für die Anfertigung von Druckwerken zu den auf dem Datenträger enthaltenden Daten verbunden ist.

7. System zur Herstellung von Daten enthaltenden Datenträgern nach einem der vorhergehenden Ansprüche,
dadurch **gekennzeichnet**, daß der Datenbankclient (3) mit einem Zwischenspeicher (11) für die Zwischenspeicherung der von dem Datenbankserver (2) übertragenen Daten verbunden ist.

8. System zur Herstellung von Daten enthaltenden Datenträgern nach einem der Ansprüche 1 bis 7,
dadurch **gekennzeichnet**, daß die Datenträger (6) Disketten sind.

9. System zur Herstellung von Daten enthaltenden Datenträgern nach einem der Ansprüche 1 bis 7,
dadurch **gekennzeichnet**, daß die Datenträger (6) Compact Discs sind.

10. System zur Herstellung von Daten enthaltenden Datenträgern nach einem der Ansprüche 1 bis 7,
dadurch **gekennzeichnet**, daß die Datenträger (6) CD-ROMs sind.

11. System zur Herstellung von Daten enthaltenden Datenträgern nach einem der Ansprüche 1 bis 10,
dadurch **gekennzeichnet**, daß die Datenträger (6) wiederbeschreibbar sind.

12. Verfahren zur Herstellung von Daten enthaltenden Datenträgern mit einen Datenbankserver (2), der mit einem Datenspeicher (1) zumindest für einen lesenden Zugriff auf die in dem Datenspeicher gespeicherten Daten verbunden ist und einem Datenbankclient (3), der mit einer Schreib-/Lese-Einrichtung (5) für die herzustellenden Datenträger (6) verbunden ist,
dadurch **gekennzeichnet**, daß Daten von dem Datenbankclient (3) zu dem Datenbankserver (2) bei einer ersten Datenübertragungsgeschwindigkeit übertragen werden und daß Daten von dem Datenbankserver (2) zu dem Datenbankclient (3) bei einer zweiten Datenübertragungsgeschwindigkeit übertragen werden, die sehr viel größer als die erste Datenübertragungsgeschwindigkeit ist.

13. Verfahren zur Herstellung von Daten enthaltenden Datenträgern nach Anspruch 12,
dadurch **gekennzeichnet**, daß die von dem Datenbankserver (2) zu dem Datenbankclient (3) übertragenen Daten in einem Zwischenspeicher (11) zwischengespeichert werden.

14. System zur Herstellung von Druckwerken mit
- einem Datenbankserver (2), der mit einem Datenspeicher (1) zumindest für einen lesenden Zugriff auf die in dem Datenspeicher gespeicherten Daten verbunden ist,
- einem Datenbankclient (3), der mit einem Drucker (7) für den Ausdruck der herzustellenden Druckwerke verbunden ist, und
- einer asymmetrischen Übertragungsstrecke (4), über die in einem ersten Kanal Daten von dem Datenbankclient (3) zu dem Datenbankserver (2) bei einer ersten Datenbankübertragungsgeschwindigkeit übertragbar sind und über die in einem zweiten Kanal Daten von dem Datenbankserver (2) zu dem Datenbankclient (2) bei einer zweiten Datenübertragungsgeschwindigkeit übertragbar sind, die sehr viel größer als die erste Datenübertragungsgeschwindigkeit ist.

15. System zur Herstellung von nach Anspruch 14,
dadurch **gekennzeichnet**, daß die Übertragungsstrecke eine Satellitenübertragungsstrecke (4) ist.

16. System zur Herstellung von Druckwerken nach Anspruch 14,
dadurch **gekennzeichnet**, daß der erste Kanal der Übertragungsstrecke ein terrestrisches Leitungsnetz (12) der zweite Kanal der Übertragungsstrecke eine Satellitenübertragungsstrecke (4) ist.

17. System zur Herstellung von Druckwerken nach Anspruch 14,
dadurch **gekennzeichnet**, daß die Übertragungsstrecke ein terrestrisches Leitungsnetz (12) ist.

18. System zur Herstellung von Druckwerken nach einem der vorhergehenden Ansprüche,
dadurch **gekennzeichnet**, daß der Datenbankclient (3) mit einem Zwischenspeicher (11) für die Zwischenspeicherung der von dem Datenbankserver (2) übertragenen Daten verbunden ist.

19. Verfahren zur Herstellung von Druckwerken mit einem Datenbankserver (2), der mit einem Datenspeicher (1) zumindest für einen lesenden Zugriff auf die in dem Datenspeicher gespeicherten Daten verbunden ist und einem Datenbankclient (3), der mit einer Schreib-/Lese-Einrichtung (5) für die herzustellenden Datenträger (6) verbunden ist,
dadurch **gekennzeichnet**, daß Daten von dem Datenbankclient (3) zu dem Datenbankserver (2) bei einer ersten Datenübertragungsgeschwindigkeit übertragen werden und daß Daten von dem Datenbankserver (2) zu dem Datenbankclient (3) bei einer zweiten Datenübertragungsgeschwindigkeit übertragen werden, die sehr viel größer als die erste Datenübertragungsgeschwindigkeit ist.

20. Verfahren zur Herstellung von Druckwerken nach Anspruch 12,
dadurch **gekennzeichnet**, daß die von dem Datenbankserver (2) zu dem Datenbankclient (3) übertragenen Daten in einen Zwischenspeicher (11) zwischengespeichert werden.
